Europäisches Patentamt

European Patent Office

Office européen des brevets

(19)

(11) EP 0 901 871 A1

(12) **EUROPÄISCHE PATENTANMELDUNG**

(43) Veröffentlichungstag:
17.03.1999 Patentblatt 1999/11

(51) Int. Cl.$^6$: **B23K 26/00**, C03B 33/08

(21) Anmeldenummer: 98114659.0

(22) Anmeldetag: 04.08.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 14.08.1997 DE 19735357

(71) Anmelder:
Linde Aktiengesellschaft
65189 Wiesbaden (DE)

(72) Erfinder:
Danzer, Wolfgang, Dr. Dipl.-Ing.
84405 Dorfen (DE)

(54) **Verfahren zum Laserschneiden von Glas**

(57) Die Erfindung betrifft ein Verfahren zum Schneiden von Glas (4). Erfindungsgemäß wird das Glas bei einer Temperatur über 300 °C mittels eines Laserstrahles und eines Schneidgasstrahles, die beide durch eine Schneiddüse (1) geführt (2) und auf die zu bearbeitende Oberfläche des Glases (4) geleitet werden, geschnitten. Bevorzugt wird das Glas (4) bei einer Temperatur geschnitten, bei welcher das Glas (4) einerseits Standfestigkeit aufweist und andererseits weitgehend spannungsfrei ist, d.h. es wird im wesentlichen im "weichen" Zustand des Glases unterhalb der Erweichungstemperatur des Glases (4) gearbeitet. Vorteilhafterweise wird das Glas (4) bei einer Temperatur geschnitten wird, bei der lg $\eta$ einen Wert zwischen 8 und 17 aufweist und $\eta$ die dynamische Viskosität (gemessen in Pa $\cdot$ s) des Glases (4) ist.

EP 0 901 871 A1

**Beschreibung**

Die Erfindung betrifft ein Verfahren zum Schneiden von Glas.

Die Bearbeitung von Glas gestaltet sich in der Regel relativ umständlich, da Glas aufgrund seiner Eigenschaften einer Behandlung wie bei anderen Werkstücken nicht zugänglich ist. Von Bedeutung für die Bearbeitung sind insbesondere die Brüchigkeit und die schlechte Wärmeleitfähigkeit des Glases.

Im folgenden wird ein übliches Verfahren des Schneidens von Glas am Beispiel einer Lampenschirmherstellung aufgezeigt. Dabei ist beispielsweise die Herstellung eines Lochs in dem Lampenschirm aus Glas erforderlich. Zunächst liegt das Glas im Glasofen als flüssiges Glas vor. Aus diesem wird nun ein Lampenschirm geformt. Anschließend findet dann ein langsames Abkühlen des Lampenschirms im Abkühlofen über einen Zeitraum von beispielsweise 5 Stunden statt. Nachfolgend wird mit einem Diamantbohrer das gewünschte Loch ausgebohrt, wobei Wasser als Hilfsmittel zum Einsatz kommt. Der abschließende Arbeitsschritt besteht im Reinigen und Trocknen des Lampenschirms. An diesem Beispiel wird deutlich, daß die Bearbeitung von Glas viele einzelne Bearbeitungsschritte notwendig macht. Die Bearbeitung ist darüber hinaus sehr personalintensiv.

Der Erfindung liegt daher die Aufgabe zugrunde, das Schneiden von Glas zu verbessern und zu vereinfachen, indem die Zahl der notwendigen Arbeitsschritte reduziert wird. Außerdem wird eine Erhöhung des Anteils der maschinellen Bearbeitung angestrebt.

Diese Aufgabe wird erfindungsgemäß dadurch gelöst, daß das Glas bei einer Temperatur über 300 °C mittels eines Laserstrahles und eines Schneidgasstrahles, die beide durch eine Schneiddüse geführt und auf die zu bearbeitende Oberfläche des Glases geleitet werden, geschnitten wird.

Überraschend ist zunächst, daß das Laserschneiden auch für die Bearbeitung von Glas geeignet ist, da ein Laserschneiden unter üblichen Bedingungen das Glas zum Springen bringt. In diesem Fall treten nämlich am Auftreffpunkt Temperaturdifferenzen in der Größenordnung von etwa 400 °C auf. Beim erfindungsgemäßen Verfahren kommt es nicht zu derart hohen Temperaturdifferenzen, so daß auf diese Weise ein Brechen des Glases in der Regel wirksam verhindert werden kann.

Laserschneidverfahren sind an sich bekannt für die Bearbeitung von metallischen Werkstücken. Einen Überblick über die in diesem Zusammenhang zur Anwendung kommenden Verfahren liefert beispielsweise die Veröffentlichung:

• "*Thermische Schneidverfahren:*
  *Autogenes Brennschneiden, Plasma-Schmelzschneiden, Laserstrahlschneiden - ein technologischer und wirtschaftlicher Vergleich",*
  H. Mair, DVS-Berichte, Band 109, Deutscher Verlag für Schweißtechnik GmbH, 1987.

Mit Vorteil wird erfindungsgemäß das Glas bei einer Temperatur geschnitten, bei welcher das Glas einerseits Standfestigkeit aufweist und andererseits weitgehend spannungsfrei ist. Das bedeutet, daß man im wesentlichen im "weichen" Zustand des Glases unterhalb der Erweichungstemperatur des Glases arbeitet.

Glas weist eine Temperaturabhängigkeit bezüglich der dynamischen Viskosität oder Zähigkeit $\eta$ auf. Mit Vorteil wird das Glas bei einer Temperatur geschnitten, bei der der lg $\eta$ einen Wert zwischen 8 und 17 aufweist und $\eta$ die dynamische Viskosität des Glases - gemessen in Pa • s [$\equiv$ N • m$^{2}$ $\equiv$ kg / (m • s)] - ist. Diese Werte sollen am Beispiel von Natronkalkglas verdeutlicht werden. Natronkalkglas besitzt einen lg $\eta$ mit einem Wert von 8 bei einer Temperatur von etwa 720 °C und einen lg $\eta$ mit einem Wert von 17 bei einer Temperatur von etwa 380 °C. Zum Vergleich dazu: Die Verarbeitungstemperatur nach dem Glasofen liegt bei etwa 1000°C, was einem lg $\eta$ mit einem Wert von etwa 4 entspricht.

Mit Vorteil wird das Glas bei einer Temperatur geschnitten, bei der der Wert lg $\eta$ der dynamischen Viskosität $\eta$ des Glases zwischen 9 und 13 liegt. Dies bedeutet wiederum am Beispiel des Natronkalkglases Temperaturen in einem Bereich zwischen etwa 530 und etwa 720°C.

In Weiterbildung der Erfindung wird eine besonders vorteilhafte Möglichkeit aufgezeigt, wie die Erwärmung des Glases auf die erforderlichen Temperaturen beim Schneiden unterstützt werden kann. Hierzu trifft das Schneidgas zumindest teilweise mit gegenüber der Umgebungstemperatur am Düsenaustritt erhöhter Temperatur zusammen mit dem Laserstrahl auf die Oberfläche des Glases an der Bearbeitungsstelle. Das Schneidgas enthält Sauerstoff oder besteht bevorzugt aus Sauerstoff. Mit Vorteil wird im letztgenannten Falle Sauerstoff mit einer Reinheit von mindestens 99,5 Gew.-% verwendet.

In Ausgestaltung der Erfindung weist das Schneidgas beim Auftreffen auf die Bearbeitungsstelle an der Oberfläche des Glases eine Temperaturverteilung quer zur Strömungsrichtung auf, wobei die Temperatur im Kernbereich des Schneidgasstrahles geringer ist als die Temperatur in der äußeren Grenzschicht des Schneidgasstrahles.

In einer weiteren vorteilhaften Ausgestaltung der Erfindung strömt aus der Schneiddüse ein Hilfsgas, welches in der äußeren Grenzschicht des Schneidgasstrahles in Richtung auf die zu bearbeitende Oberfläche des Glases geleitet wird.

Besondere Vorteile sind dadurch zu erzielen, daß das Hilfsgas Wasserstoff umfaßt oder bevorzugt aus Wasserstoff besteht, welcher mit Sauerstoff des Schneidgases verbrennt. In diesem Fall wird Wasserstoff nur in der Außenschicht des Sauerstoffstrahles geführt und verbrennt dort. Das bedeutet, das Arbeitsgas ist in der Kontaktzone des zu schneidenden Glases heiß und im Kern, wo das Glas aus der Schnittfuge geblasen werden soll, kälter. Die geringere Temperatur im Kern der Schneidgasströmung bewirkt, daß das Gas mehr Stoßkraft zum Auswerfen des flüssigen Materials besitzt.

Bevorzugt wird das Schneidgas koaxial mit dem Laserstrahl auf die Oberfläche des Glases geführt.

In der Regel trifft der Laserstrahl im wesentlichen fokussiert auf die Oberfläche des Glases an der Bearbeitungsstelle auf.

Das erfindungsgemäße Verfahren zum Schneiden von Glas bringt eine Reduktion der Arbeitsgänge bei der Glasbearbeitung mit sich. Dies kann an dem oben erwähnten Beispiel unter Verwendung des erfindungsgemäßen Verfahrens verdeutlicht werden. Aus flüssigem Glas aus dem Glasofen wird der Lampenschirm wie oben beschrieben geformt. Anschließend wird das gewünschte Loch mit dem Laser in den Lampenschirm geschnitten. Schließlich erfolgt das langsame Abkühlen des Lampenschirms im Abkühlofen über die dafür erforderliche Zeitspanne, im Beispiel 5 Stunden. Eine Nachbearbeitung durch Reinigen und Trocknen ist nicht mehr notwendig und kann daher entfallen.

An diesem Beispiel wird deutlich, daß die erfindungsgemäße Bearbeitung bei Temperaturen über 300 °C dadurch wesentlich erleichtert wird, daß das zu bearbeitende Werkstück aus Glas herstellungsbedingt bereits bei sehr hohen Temperaturen vorliegt und eine Erwärmung auf die erhöhten Temperaturen des erfindungsgemäßen Verfahrens in einem eigenen Arbeitsschritt überflüssig ist.

Aus der EP 0 458 182 B1 ist ein Verfahren zum Laserstrahl-Brennschneiden von metallischen Werkstücken mit einem fokusierten Laserstrahl und einem Schneidgasstrahl bekann, die beide durch eine Schneiddüse geführt werden, wobei der Schneidgasstrahl mit einem heißen Gasschleier vorhangartig umhüllt wird. Mittels dieses heißen Gasschleiers wird eine zusätzliche Erwärmung des metallischen Werkstückes in Schnittdickenrichtung bewirkt, wodurch eine Aufhärtung in der enstehenden Schnittfuge verhindert werden soll. Die dort offenbarten Schneiddüsen eignen sich prinzipiell für das erfindungsgemäße Verfahren.

Ganz besonders eignet sich jedoch eine Schneiddüse, welche das heiße Arbeitsgas auf bestimmte Weise, nämlich durch zumindest teilweises Verbrennen des Schneidgases durch ein Hilfsgas im Randbereich der Schneidgasströmung zwischen Schneiddüse und zu bearbeitender Glasoberfläche, erzeugt. Eine derartige Düse wird nachfolgend näher erläutert. Hierbei zeigt die einzige

Figur:    eine Düse für den Einsatz im erfindungsgemäßen Verfahren.

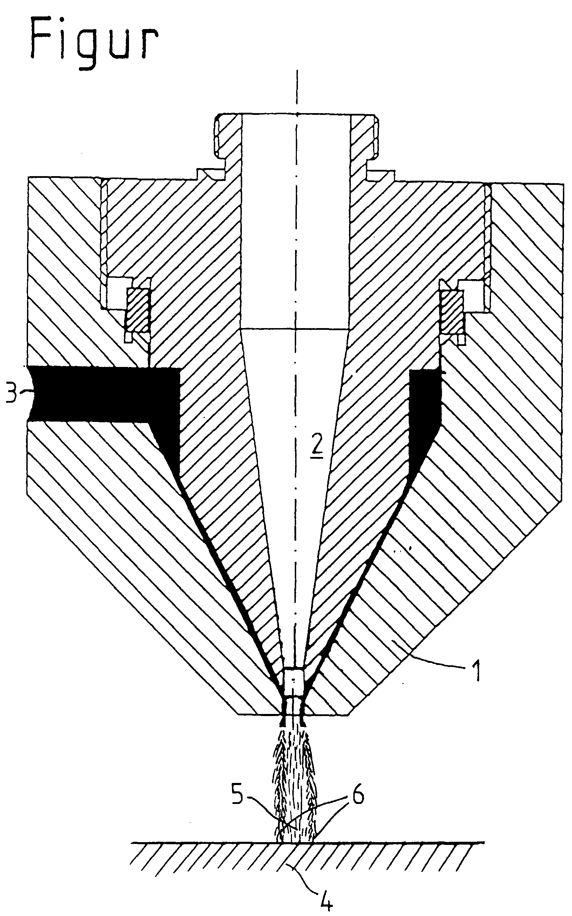

In der Figur ist eine Schneiddüse 1 abgebildet, die einen zentral angeordneten Düsenkanal 2 enthält. Durch diesen zentral angeordneten Düsenkanal 2 wird einerseits der Laserstrahl (nicht dargestellt) und das Schneidgas, beispielsweise Sauerstoff, geleitet. Ferner ist ein weiterer Düsenkanal 3 für das Hilfsgas, beispielsweise Wasserstoff, vorgesehen. Der Schneidsauerstoff strömt - den nicht dargestellten Laserstrahl umgebend - gegen die Oberfläche des Werkstückes 4 aus Glas. Der über den Düsenkanal 3 zugeführte Wasserstoff verbrennt mit Sauerstoff im äußeren Bereich des Sauerstoffstrahles. Daraus resultiert ein kälterer Sauerstoffstrahl im Kernbereich 5 ("kalte" Zone) und ein gegenüber dem Kernbereich erwärmter Sauerstoffstrahl in der äußeren Grenzschicht 6 ("heiße" Zone).

**Patentansprüche**

1.    Verfahren zum Schneiden von Glas (4), **dadurch gekennzeichnet**, daß das Glas (4) bei einer Temperatur über 300°C mittels eines Laserstrahles und eines Schneidgasstrahles, die beide durch eine Schneiddüse (1) geführt (2) und auf die zu bearbeitende Oberfläche des Glases (4) geleitet werden, geschnitten wird.

2.    Verfahren nach Anspruch 1, dadurch gekennzeichnet, daß das Glas (4) bei einer Temperatur geschnitten wird, bei welcher das Glas (4) einerseits Standfestigkeit aufweist und andererseits weitgehend spannungsfrei ist.

3.    Verfahren nach Anspruch 1 oder 2, dadurch gekennzeichnet, daß das Glas (4) bei einer Temperatur geschnitten wird, bei der lg η einen Wert zwischen 8 und 17 aufweist und η die dynamische Viskosität (gemessen in Pa · s) des Glases (4) ist.

4.    Verfahren nach Anspruch 3, dadurch gekennzeichnet, daß das Glas (4) bei einer Temperatur geschnitten wird, bei der Wert lg η der dynamischen Viskosität η des Glases (4) zwischen 9 und 13 liegt.

5.    Verfahren nach einem der Ansprüche 1 bis 3, dadurch gekennzeichnet, daß das Schneidgas zumindest teilweise mit gegenüber der Umgebungstemperatur am Düsenaustritt erhöhter Temperatur zusammen mit dem Laserstrahl auf die Oberfläche des Glases (4) an der Bearbeitungsstelle trifft.

6.    Verfahren nach einem der Ansprüche 1 bis 5, dadurch gekennzeichnet, daß das Schneidgas Sauerstoff enthält oder das Schneidgas aus Sauerstoff besteht.

7. Verfahren nach einem der Ansprüche 1 bis 6, dadurch gekennzeichnet, daß das Schneidgas beim Auftreffen auf die Bearbeitungsstelle an der Oberfläche des Glases (4) ein Temperaturverteilung quer zur Strömungsrichtung dergestalt aufweist, daß die Temperatur im Kernbereich (5) des Schneidgasstrahles geringer ist als die Temperatur in der äußeren Grenzschicht (6) des Schneidgasstrahles.

8. Verfahren nach einem der Ansprüche 1 bis 7, dadurch gekennzeichnet, daß aus der Schneiddüse (1) ein Hilfsgas (3) strömt, welches in der äußeren Grenzschicht (6) des Schneidgasstrahles in Richtung auf die zu bearbeitende Oberfläche des Glases (4) geleitet wird.

9. Verfahren nach Anspruch 8, dadurch gekennzeichnet, daß das das Hilfsgas (3) Wasserstoff umfaßt, welcher mit Sauerstoff des Schneidgases verbrennt.

10. Verfahren nach einem der Ansprüche 1 bis 9, dadurch gekennzeichnet, daß das Schneidgas koaxial mit dem Laserstrahl auf die Oberfläche des Glases (4) geführt wird.

11. Verfahren nach einem der Ansprüche 1 bis 10, dadurch gekennzeichnet, daß der Laserstrahl im wesentlichen fokussiert auf die Oberfläche des Glases (4) an der Bearbeitungsstelle trifft.

# Figur

**Europäisches Patentamt**

# EUROPÄISCHER RECHERCHENBERICHT

Nummer der Anmeldung

EP 98 11 4659

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | DE 42 24 282 A (SCHMIDT KRISTINA DIPL ING ;ECKSTEIN MANUELA DR ING (DE); HUELSENBE) 27. Januar 1994 | 1-4,10, 11 | B23K26/00 C03B33/08 |
| Y | * Spalte 2, Zeile 38 - Zeile 51; Ansprüche 1-3; Abbildung 1 * | 6,8,9 | |
| X | US 4 467 168 A (MORGAN GEORGE M ET AL) 21. August 1984 * Spalte 7, Zeile 44 - Zeile 57; Abbildung 2 * | 1-4,10, 11 | |
| Y | GB 1 433 563 A (COMMISSARIAT ENERGIE ATOMIQUE) 28. April 1976 * Ansprüche 1,4; Abbildung 4 * | 6,8,9 | |
| Y | GB 1 292 981 A (BRITISH OXYGEN COMPANY LIMITED) 18. Oktober 1972 * Seite 1, Zeile 33 - Zeile 42 * * Seite 1, Zeile 73 - Zeile 80; Anspruch 1 * | 8,9 | |
| A | US 4 682 003 A (SHIONO SHIGEO ET AL) 21. Juli 1987 * Spalte 4, Zeile 23 - Zeile 56; Abbildungen 1,4 * | 1-11 | RECHERCHIERTE SACHGEBIETE (Int.Cl.6) B23K C03B |

Der vorliegende Recherchenbericht wurde für alle Patentansprüche erstellt

| Recherchenort | Abschlußdatum der Recherche | Prüfer |
|---|---|---|
| MÜNCHEN | 11. Januar 1999 | Pricolo, G |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 98 11 4659

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-01-1999

| Im Recherchenbericht angeführtes Patentdokument | Datum der Veröffentlichung | Mitglied(er) der Patentfamilie | Datum der Veröffentlichung |
|---|---|---|---|
| DE 4224282 A | 27-01-1994 | KEINE | |
| US 4467168 A | 21-08-1984 | CA 1188747 A<br>EP 0062484 A<br>JP 57209838 A | 11-06-1985<br>13-10-1982<br>23-12-1982 |
| GB 1433563 A | 28-04-1976 | FR 2228040 A<br>BE 813811 A | 29-11-1974<br>16-08-1974 |
| GB 1292981 A | 18-10-1972 | KEINE | |
| US 4682003 A | 21-07-1987 | JP 61229487 A<br>BE 903908 A<br>DE 3546001 A<br>FR 2579974 A<br>GB 2173186 A,B | 13-10-1986<br>16-04-1986<br>16-10-1986<br>10-10-1986<br>08-10-1986 |

EPO FORM P0461

Für nähere Einzelheiten zu diesem Anhang : siehe Amtsblatt des Europäischen Patentamts, Nr.12/82